# EUROPEAN PATENT APPLICATION

(11) **EP 4 818 863 A1**
(43) Date of publication of application: **07.10.2026**
(21) Application number: 26167452.7
(22) Date of filing: 25.03.2026
(51) Int. Cl.: G06F 3/04817, G06F 3/12, G06F 3/0482, H04N 1/00, G06F 3/04842

(54) **PROCESSING APPARATUS AND DISPLAY METHOD**

(30) Priority: 04.04.2025 JP 2025062274
(71) Applicant: Sharp Kabushiki Kaisha, Sakai City, Osaka 590-8522 (JP)
(72) Inventor: OGASAWARA, Kenji, Osaka, 590-8522 (JP)
(74) Representative: Müller Hoffmann & Partner

(57) **Abstract**

A processing apparatus of the present disclosure includes a display that displays an object corresponding to a specific function, and one or more controllers. The one or more controllers change a display mode of the object according to a processing status related to execution of the specific function.

## Description

### BACKGROUND OF THE INVENTION

### Field of the Invention

The present disclosure relates to a processing apparatus and the like. This application is based on Japanese Patent Application No. 2025-062274 filed April 4, 2025, the contents of which are incorporated herein by reference.

### Description of the Background Art

Japanese Unexamined Patent Application Publication No. 2017-211830 discloses that when firmware installed in a multifunction peripheral can be updated, a specific firmware warning icon indicating that the firmware can be updated is displayed on a mobile terminal capable of performing wireless communication with the multifunction peripheral.

An object of the present disclosure is to provide a processing apparatus and the like that enable a user to recognize the importance of an event to be notified.

### SUMMARY OF THE INVENTION

In order to solve the above problem, a processing apparatus according to the present disclosure includes: a display that displays an object corresponding to a specific function; and one or more controllers, wherein the one or more controllers change a display mode of the object according to a processing status related to execution of the specific function.

A display method according to the present disclosure is a display method of displaying an object corresponding to a specific function, the display method including changing a display mode of the object according to a processing status related to execution of the specific function.

The present disclosure can provide a processing apparatus and the like that enable a user to recognize the importance of an event to be notified.

### BRIEF DESCRIPTION OF THE DRAWINGS

FIG. 1 is a perspective view of an external appearance of an overall configuration of a multifunction peripheral according to a first embodiment.
FIG. 2 is a diagram illustrating a functional configuration of an image forming apparatus according to the first embodiment.
FIG. 3A is a diagram illustrating a correspondence relationship between processing stages related to firmware update and display modes of an icon as an object corresponding to firmware update.
FIG. 3B is a diagram illustrating a display example in which an icon is displayed as an animation video.
FIG. 4 is a flowchart illustrating a processing flow according to the first embodiment.
FIG. 5 is a diagram illustrating an operation example according to the first embodiment.
FIG. 6 is a diagram illustrating an operation example according to the first embodiment.
FIG. 7 is a diagram illustrating an operation example according to the first embodiment.
FIG. 8 is a diagram illustrating an operation example according to the first embodiment.
FIG. 9 is a diagram illustrating an operation example according to a second embodiment.
FIG. 10 is a diagram illustrating an operation example according to a third embodiment.
FIG. 11 is a diagram illustrating an operation example according to the third embodiment.
FIG. 12 is a diagram illustrating an operation screen of a typical multifunction peripheral.
FIG. 13 is a diagram illustrating a correspondence relationship between display positions of display areas for icons in a display area of a system information button and icons displayed in the respective areas.
FIG. 14 is a diagram illustrating an example of a display configuration of a system information screen displayed upon receipt of an instruction by selection of the system information button.

### DESCRIPTION OF THE PREFERRED EMBODIMENTS

Embodiments of the present disclosure will be described below with reference to the drawings. The following embodiments are examples for describing the present disclosure, and the technical content described in the claims is not limited to the following description.

Processing apparatuses such as multifunction peripherals include a processing apparatus that when an event to be notified to a user is present, displays an icon corresponding to the event in a predetermined area of an operation screen or the like to notify the user of the event.

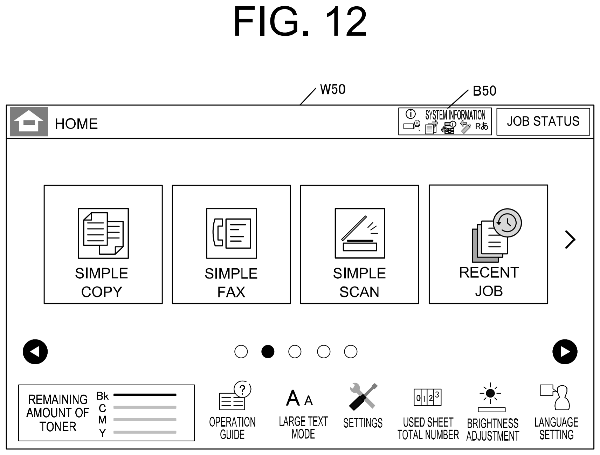

FIG. 12 is a diagram illustrating an example of a display configuration of an operation screen (home screen) of a typical multifunction peripheral. A home screen W50 illustrated in FIG. 12 has a system information button B50 that receives an instruction to display a system information screen. A display area of the system information button B50 illustrated in FIG. 12 can display an icon as an object corresponding to an event to be notified to a user. As illustrated in the next figure, icons illustrated in FIG. 12 indicate five events related to a LAN cable non-connected state, IR transmission error data, firmware update (update information is present), USB device check, and keyboard characters.

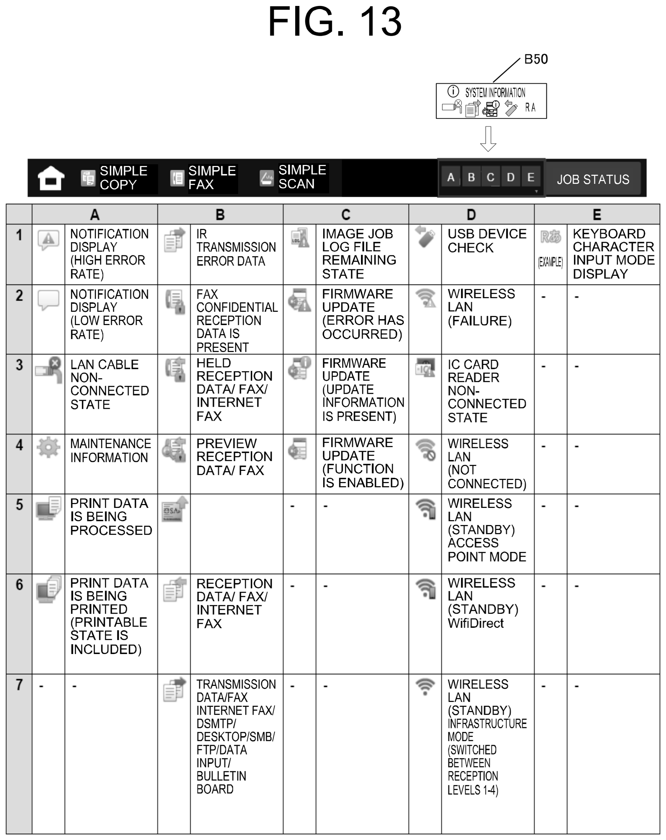

To display an icon as an object corresponding to an event to be notified to the user in the display area of the system information button B50, as illustrated in FIG. 13, a maximum of five icons (A to E) can be simultaneously displayed. FIG. 13 illustrates a correspondence relationship between display positions of five areas A to E in the display area of the system information button B50 and events displayed in the respective areas A to E. When more than five events (icons) need to be displayed in the display area of the system information button B50, icons to be displayed are switched at regular intervals according to the following rules.
· When events corresponding to icons to be displayed in the same area simultaneously occur, the icons to be displayed are not alternately switched, and an icon with higher priority is displayed. An icon that cannot be displayed in the area is displayed in a vacant area in the order of A, B, C, D, and E.
· An icon displayed in an area different from the original area is displayed in the original area at a timing when the simultaneous occurrence of the events ends.
· When two or more events for the same area occur while icons are displayed in all the areas A to E, cyclic display is performed according to the order of priority of the area.

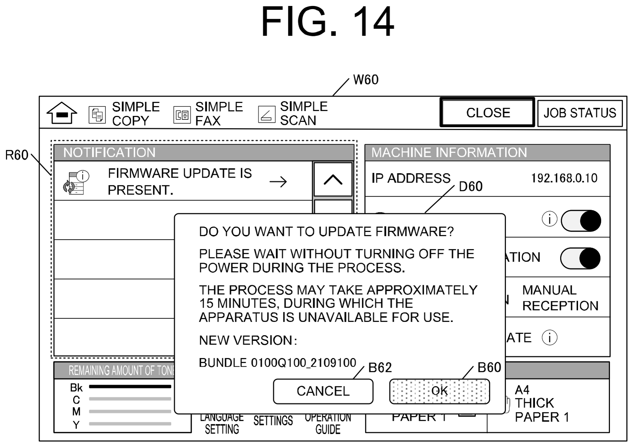

FIG. 14 illustrates an example of a display configuration of a system information screen W60 that is displayed upon receipt of an instruction by selection of the display area of the system information button B50 that displays the icons. The system information screen W60 includes a notification display area R60. The notification display area R60 is an area that displays, for each item, the content of an event to be notified to the user, using an icon displayed in the display area of the system information button B50. The notification display area R60 illustrated in FIG. 14 is an example in which the notification display area R60 displays the content notified using an icon related to firmware update (Firmware update is present).

When the firmware update item in the notification display area R60 is selected, a dialog D60 that receives an instruction by selection of whether to execute the firmware update is displayed. When an OK button B60 for providing consent to execution of the firmware update is selected by the user, the firmware update is started. In a case where a mode related to firmware update is an automatic firmware update mode (also simply referred to as an automatic mode) in which update is automatically executed at an update start time set in advance, even when an instruction by selection of the OK button B60 is not provided and the dialog D60 is left open, the firmware update is automatically started after a predetermined time has elapsed. A cancel button B62 is a button that receives an instruction to cancel the firmware update.

As illustrated in FIG. 12, even when an icon displayed in the display area of the system information button B50 is an icon used to notify the user of an event related to execution of an important function such as execution of firmware update, the icon is displayed uniformly as a still image; thus, it is difficult for the user to recognize, at a glance at the icon, the importance of the event notified using the icon.

In the present disclosure, the following embodiments implement a processing apparatus and the like that enable a user to recognize the importance of an event to be notified, by changing a display mode of an icon as an object according to a processing status related to execution of a specific function.

The specific function according to the present disclosure refers to, for example, a function that implements, through a plurality of processing stages, measures required to maintain the processing apparatus or handling of an event that interferes with or affects execution of a job, such as firmware update, replacement of consumables including toner and a fixing device, or a network connection problem, and the processing status is assumed to include the plurality of processing stages. In the following embodiments, as an example of the specific function, firmware update will be described.

### 1 First Embodiment

In a first embodiment, a display mode of an object (icon) corresponding to firmware update as a specific function is changed according to a processing status related to execution of the firmware update.

### 1.1 Functional Configuration

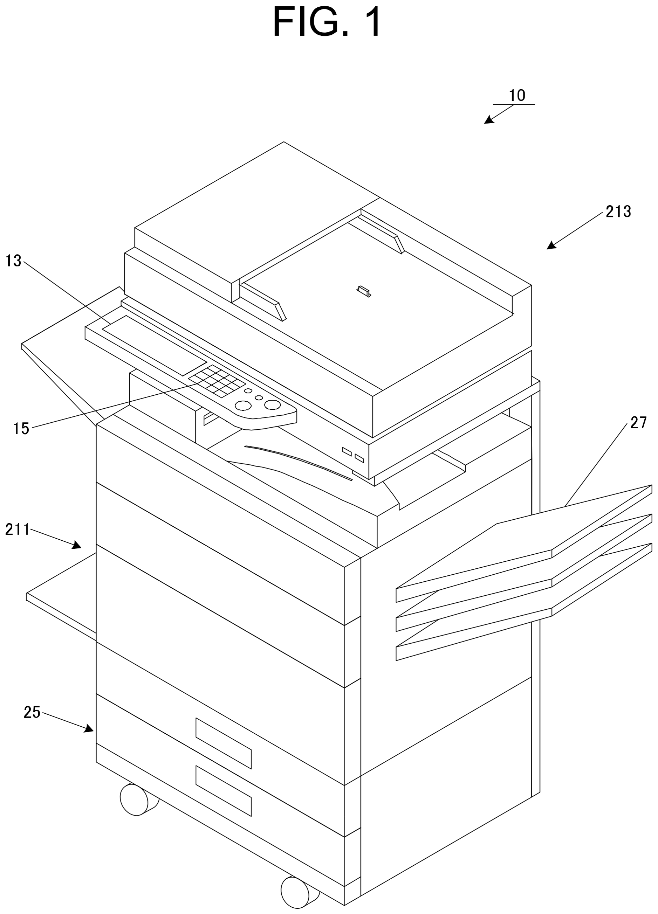

FIG. 1 is a diagram illustrating an overall configuration of an image forming apparatus 10 as a processing apparatus according to the first embodiment. In the first embodiment, a multifunction peripheral will be described as an example of the image forming apparatus 10; however, the image forming apparatus 10 may be a printer, a copier, a fax machine, or the like with a specific type of job function.

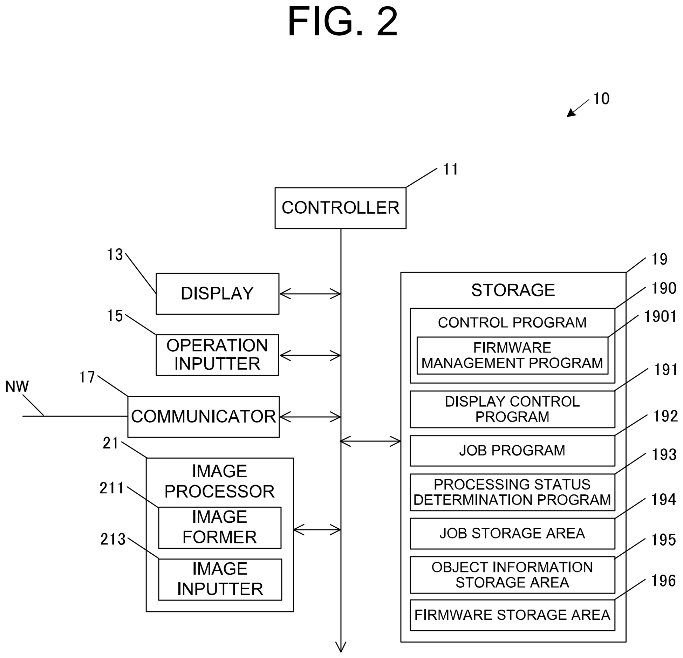

FIG. 2 is a diagram illustrating a functional configuration of the image forming apparatus 10. The image forming apparatus 10 includes, as a functional configuration, a controller 11, a display 13, an operation inputter 15, a communicator 17, a storage 19, and an image processor 21.

The controller 11 comprehensively controls the image forming apparatus 10. The controller 11 may be composed of one or more arithmetic devices (central processing units (CPUs), digital signal processors (DSPs), or the like). The controller 11 reads and executes various programs stored in the storage 19 to implement various functions of the image forming apparatus 10. The controller 11 may be configured as a system on a chip (SoC) having a plurality of functions of the functions described below. The controller 11 may be composed of one or more control circuits.

The display 13 may be composed of a display device capable of displaying various types of information to the user or the like, such as a liquid crystal display (LCD), an organic electroluminescence (EL) display, a micro LED display, or a mini LED display.

The operation inputter 15 receives an input of an operation or an input of information from the user or the like. The operation inputter 15 may be composed of, for example, various input devices including an operation key such as a hardware key or a software key, and a button. The operation inputter 15 may be configured as a touch panel display that allows input via the display 13. In that case, the input to the touch panel display may be performed, for example, using a resistive method, an infrared method, an electromagnetic induction method, a capacitive method, or the like.

The communicator 17 includes, for example, a wired/wireless network communication interface for communicating with another terminal device such as a PC via a network NW such as a local area network (LAN), a wide area network (WAN), the Internet, a telephone line, or a fax line. The wireless network communication interface may include, for example, an interface for short-range wireless communication such as Bluetooth (registered trademark), Wi-fi (registered trademark), or IrDA.

The storage 19 is composed of one or more storage devices that store various programs and various data required for operation of the image forming apparatus 10. The storage 19 may be composed of, for example, a storage device such as a random access memory (RAM), a solid state drive (SSD), a hard disk drive (HDD), or a read-only memory (ROM).

In the first embodiment, the storage 19 stores a control program 190, a display control program 191, a job program 192, and a processing status determination program 193, and has a job storage area 194, an object information storage area 195, and a firmware storage area 196.

The control program 190 is a program read by the controller 11 to comprehensively control the image forming apparatus 10. When the controller 11 reads the control program 190, the controller 11 executes firmware stored in the firmware storage area 196 to control driving of hardware such as the display 13, the operation inputter 15, the communicator 17, and the image processor 21. The control program 190 includes a firmware management program 1901. When the controller 11 reads the firmware management program 1901, the controller 11 maintains and updates the firmware stored in the firmware storage area 196 to perform management so that the firmware is in the latest state (version). For example, when the controller 11 reads the firmware management program 1901, the controller 11 periodically communicates with a server device (not illustrated) provided by a manufacturer of the image forming apparatus 10 or the like, and in a case where firmware for update is present, the controller 11 downloads the firmware. When the firmware for update is downloaded and preparation for update is completed, the controller 11 receives an input of a firmware update trigger, and executes firmware update.

The display control program 191 is a program read by the controller 11 to perform output control of a screen displayed on the display 13 or the operation inputter 15 configured as a touch panel display. When the controller 11 reads the display control program 191, the controller 11 controls display of an operation screen (e.g., home screen, job setting screen, system information screen, or the like) displayed on the display 13 (operation inputter 15) and an object displayed in a predetermined display area of each operation screen. The object according to the present disclosure refers to an object for which display control on an operation screen is possible, and examples of the object include an icon, an operation button, a dialog, a pointer, an input box that receives an input or selection of various types of information, and a selection menu.

The job program 192 is, for example, a program read by the controller 11 to execute various jobs such as a print job, a copy job, a scan job, a fax transmission job, or an e-mail transmission job. When the controller 11 reads the job program 192, the controller 11 switches an apparatus mode of the image forming apparatus 10 to a job mode for executing each job, and executes a job for which an instruction for execution is received.

The processing status determination program 193 is a program read by the controller 11 to determine a processing status related to execution of a specific function. For example, in a case where the specific function is a function related to firmware update, when the controller 11 reads the processing status determination program 193, the controller 11 determines which of at least the following stages is the stage of the processing status related to firmware update:
(1) Download stage for firmware for update,
(2) Update preparation completion stage for firmware whose download is completed, and
(3) Firmware update completion stage.

The controller 11 changes, according to the determination of the processing status, a display mode of an icon as an object corresponding to firmware update. The change in the display mode of an icon according to the present disclosure includes, in addition to a change in the display mode of the icon, a change in the icon itself and a change in part of the icon.

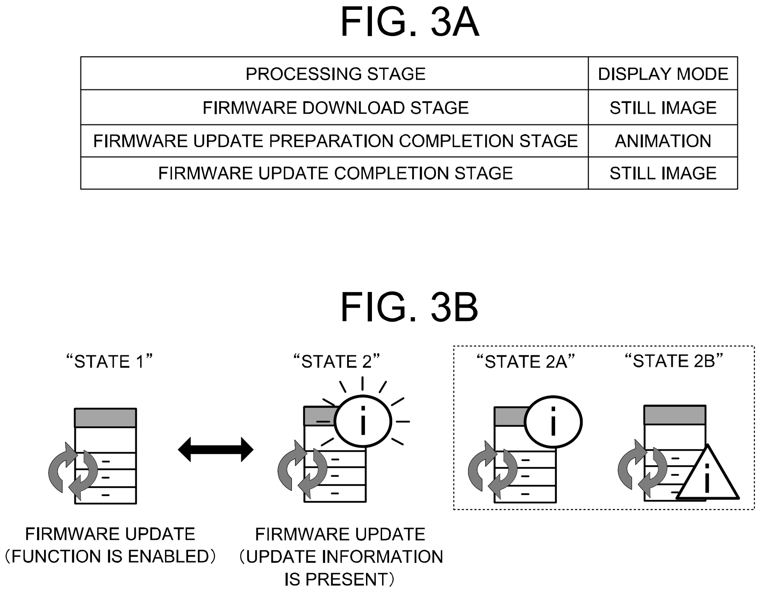

FIG. 3A is a diagram illustrating a correspondence relationship between processing stages related to firmware update and display modes of an icon as an object corresponding to firmware update.

In the download stage for firmware for update, an icon is displayed as a still image that is not conspicuous. On the other hand, in the update preparation completion stage for firmware whose download is completed, the user's attention needs to be drawn, and thus the display mode of the icon is changed to animation display (may be referred to as an animation video) to allow the icon to be particularly conspicuous. At this time, the icon displayed as an animation video may be a video based on an image different from the still image displayed in the download stage for firmware for update, or may be a video based on the same image as the still image. In the firmware update completion stage, the display of the icon as an animation video is ended, and the display mode of the icon is returned to the still image.

FIG. 3B is a diagram illustrating a display example in which an icon is displayed as an animation video. FIG. 3B illustrates an example of a display mode of an icon as a still image displayed for "state 1" (firmware update (function is enabled), see FIGs. 12 and 13) and an icon as an animation video displayed for "state 2" (firmware update (update information is present), see

FIGs. 12 and 13). The icon displayed for "state 1" is an example of the icon displayed in the firmware download stage and the firmware update completion stage. On the other hand, the icon displayed for "state 2" is an example of the icon displayed in the firmware update preparation completion stage. FIG. 3B illustrates a state in which as the icon for "state 2", part ([i] mark) of the icon in which "i" representing information is enclosed in a circle is blinking as an animation.

FIG. 3B illustrates a state in which the display mode of the icon is changed from "state 1" to "state 2" and then to "state 1" according to the processing status for firmware update. For example, until preparation for firmware update is completed and then a firmware update start trigger is input and the firmware update is completed, the icon as an animation video for "state 2" may be continuously displayed, or the display mode of the icon may be changed from the animation video to a still image ("state 2A") from which animation display is eliminated, or the like. Furthermore, when an error such as a firmware download failure or a firmware update failure occurs, an icon having a triangle [i] mark for "state 2B" or the like may be displayed as an "attention" icon to draw the user's attention.

For example, in a case where a firmware update setting is in an "administrator confirmation mode (manual mode) in which when firmware update is present, permission from an administrator is required and the administrator or the like manually provides an instruction to execute the update", when no update start trigger is input after a predetermined time has elapsed from completion of firmware download, the following may be performed:
· Change in color of the [i] mark of the icon for "state 2",
· Change in blinking frequency of the [i] mark of the icon for "state 2", change in icon type, or
· Change in icon display size. Furthermore, at this time, the display position of the icon may be changed.

For example, in a case where the firmware update setting is in the "automatic mode in which at the update start time set in advance, update is automatically executed without permission from the administrator", when the update is repeatedly postponed a predetermined number of times or more after completion of firmware download, the following may be performed:
· Change in color of the [i] mark of the icon for "state 2",
· Change in blinking frequency of the [i] mark of the icon for "state 2", change in icon type, or
· Change in icon display size. Furthermore, at this time, the display position of the icon may be changed.

Referring back to FIG. 2, the job storage area 194 is a storage area that stores information required for the image forming apparatus 10 to execute various jobs such as a print job, a copy job, a scan job, a fax transmission job, or an e-mail transmission job.

The object information storage area 195 is a storage area that stores image information such as a still image for an object such as an icon, an operation button, or a dialog and video (moving image) information such as an animation.

The firmware storage area 196 is a storage area that stores firmware executed by the controller 11 to control hardware when the controller 11 reads the control program 190. In the firmware storage area 196, firmware for update downloaded from a server device may be stored. The firmware storage area 196 may be provided in a storage area placed in a more secure environment other than the storage 19.

The image processor 21 includes an image former 211 and an image inputter 213. The image former 211 feeds a sheet of paper from a paper feeder 25 and forms an image based on image data on the sheet of paper, and then discharges, to a paper discharger 27, the sheet of paper on which the image is formed. The image former 211 may be composed of, for example, an electrophotographic laser printer or the like. In that case, the image former 211 forms an image using toner supplied from toner cartridges (not illustrated) corresponding to toner colors (e.g., cyan, magenta, yellow, and black).

The image inputter 213 generates image data by scanning a document. The image inputter 213 may be configured, for example, as a scanner device that includes, in addition to an image sensor such as a charge coupled device (CCD) or a contact image sensor (CIS), an automatic document feeder (ADF), a flatbed on which a document is placed and read, and the like. The configuration of the image inputter 213 is not particularly limited as long as a reflected light image from a document image can be read by the image sensor. The image inputter 213 may be configured, for example, as an interface capable of acquiring image data stored in a storage medium such as a USB memory or image data transmitted from a terminal device (not illustrated). The image processor 21 may perform, for example, shading correction or density correction of image data input from the image inputter 213 and generate image data for image transmission.

### 1.2 Processing Flow

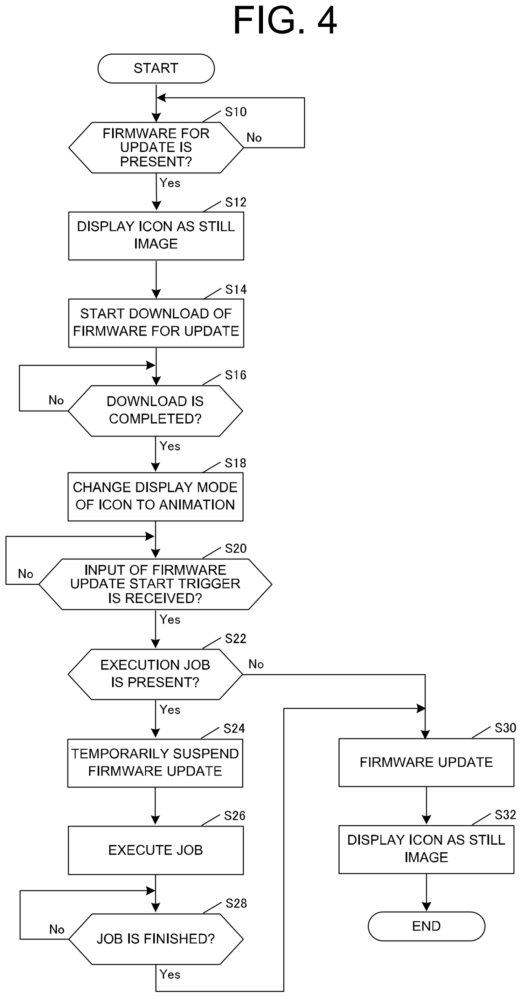

Next, a processing flow according to the first embodiment will be described with reference to a flowchart in FIG. 4. The controller 11 performs the processing illustrated in FIG. 4 by reading the control program 190 (firmware management program 1901), the display control program 191, the job program 192, the processing status determination program 193, and the like.

The controller 11 checks whether firmware for update is present (step S10). The controller 11 checks whether firmware for update is present, for example, by communicating with a server device (not illustrated).

When the controller 11 confirms the presence of firmware for update, the controller 11 determines that the processing status related to firmware update is the download stage for firmware for update, and displays the icon as a still image ("state 1" in FIG. 3B) corresponding to firmware update. (Yes in step S10 -> step S12). On the other hand, when the controller 11 cannot confirm the presence of firmware for update, the controller 11 waits until the presence of firmware for update is confirmed (No in step S10).

Then, the controller 11 starts download of the firmware for update (step S14).

Then, the controller 11 determines whether the download of the firmware for update is completed (step S16). When the controller 11 determines that the download of the firmware for update is completed, the controller 11 determines that the processing status related to firmware update is the update preparation completion stage for firmware whose download is completed, and changes the display mode of the icon from the still image to the animation video ("state 2" in FIG. 3B) (Yes in step S16 -> step S18). On the other hand, when the controller 11 determines that the download of the firmware for update is not completed, the controller 11 continuously performs the download (No in step S16).

Then, the controller 11 determines whether an input of a firmware update start trigger is received (step S20). In this case, the controller 11 can determine that an input of a firmware update start trigger is received when an instruction to start firmware update is received from the user or when a predetermined time has elapsed from completion of the download of the firmware for update.

When the controller 11 determines that an input of a firmware update start trigger is received, the controller 11 determines whether an execution job such as a print job, a copy job, a scan job, a fax transmission job, or an e-mail transmission job is present (Yes in step S20 -> step S22). Examples of the execution job include a spooled print job, a job being executed, and a reserved (standby) job. The controller 11 may determine that an execution job is present when at least one of these jobs is present or when at least one of a spooled job and a job being executed is present. When the controller 11 determines that an execution job is present, the controller 11 temporarily suspends firmware update (Yes in step S22 -> step S24). When the controller 11 determines that an execution job is not present, the controller 11 shifts the processing to step S30 (No in step S22 -> step S30).

Then, the controller 11 executes the execution job (step S26). During execution of the job, the controller 11 may continuously display the icon as an animation video for "state 2". Then, the controller 11 determines whether the execution job is finished (step S28). When the controller 11 determines that the execution job is finished, the controller 11 executes the firmware update (Yes in step S28 -> step S30). If an error occurs after the firmware update is started, the "attention" icon for "state 2B" in FIG. 3B may be displayed. When the controller 11 determines that the execution job is not finished, the controller 11 continuously executes the execution job (No in step S28).

After the firmware update, the controller 11 causes the display mode of the icon to return to the icon as a still image ("state 1" in FIG. 3B), and ends the processing (step S32). In this case, the display of the icon related to firmware update may be ended.

### 1.3 Operation Example

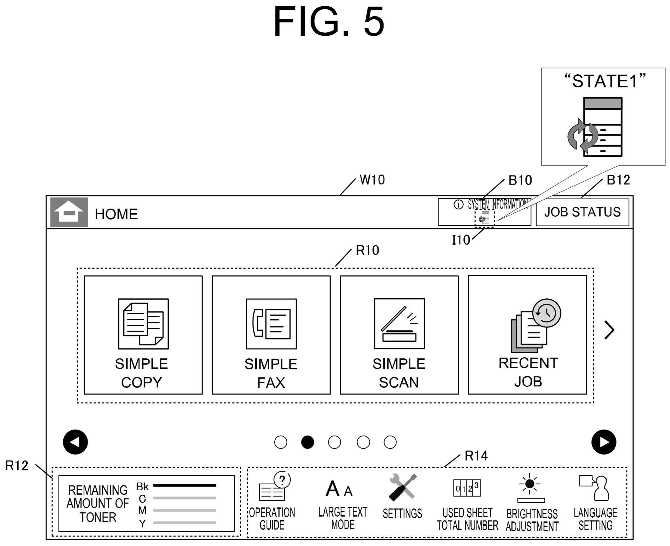

Next, an operation example according to the first embodiment will be described. FIGs. 5 to 7 are each a diagram illustrating an example of a display configuration of a home screen W10 according to the first embodiment. FIG. 5 illustrates a state in which an icon 110 as a still image for "state 1" is displayed on the home screen W10 when the processing status related to firmware update is the download stage for firmware for update.

The home screen W10 is a basic screen that is displayed on the display 13, for example, at the time of power-on, during standby, at the time of activation from the sleep mode, or the like and receives an input of an instruction or an operation from the user. The home screen W10 includes a system information button B10, a job status button B12, a mode selection area R10, an apparatus state display area R12, and a function selection area R14.

The system information button B10 is an operation object that receives an instruction to display a system information screen (described later). The system information button B10 is displayed in a predetermined display area of the home screen W10. When an instruction by selection of the system information button B10 is received, the controller 11 displays the system information screen that is an integration screen on which, for example, system information such as information on apparatus maintenance such as running out of paper or firmware update and apparatus information on a communication setting or the like is integrated.

When notification information to the user is present, the system information button B10 functions as a display area having a rectangular display surface that can display a character string, a figure, or the like related to the notification information. The system information button B10 illustrated in FIG. 5 is an example of a case where the system information button B10 functions as a display area that displays, on a display screen, the character string "system information" indicating that the button is a button that receives an instruction to display the system information screen and the icon 110 as a still image for "state 1" indicating the processing status for firmware update (download stage for firmware for update).

The job status button B12 is a button that receives an instruction to display a job status screen (not illustrated). When an instruction by selection of the job status button B12 is received, the controller 11 displays the job status screen on which a job being executed or a standby job is indicated by characters or an icon.

The mode selection area R10 is a display area that displays shortcut keys that receive an instruction to perform screen transition to various setting screens related to modes or functions that can be implemented by the image forming apparatus 10. FIG. 5 illustrates an example in which the mode selection area R10 displays, in addition to shortcut keys related to "simple copy", "simple fax", and "simple scan", a shortcut key related to "recent job".

The apparatus state display area R12 is a display area that displays an apparatus state of the image forming apparatus 10. FIG. 5 illustrates an example in which the apparatus state display area R12 displays the remaining amount of toner.

The function selection area R14 is a display area that displays various buttons that receive a change instruction, a reference instruction, or the like related to a function setting of the image forming apparatus 10. For example, when a "large text mode" button is selected, a check mark is added to the upper right corner of the button, and the character size on the screen becomes large. When a "used sheet total number" button is selected, a display screen that displays the total number of used sheets and the remaining amount (%) of toner is displayed. A "settings" button is a button that receives an instruction to display a system setting screen (not illustrated).

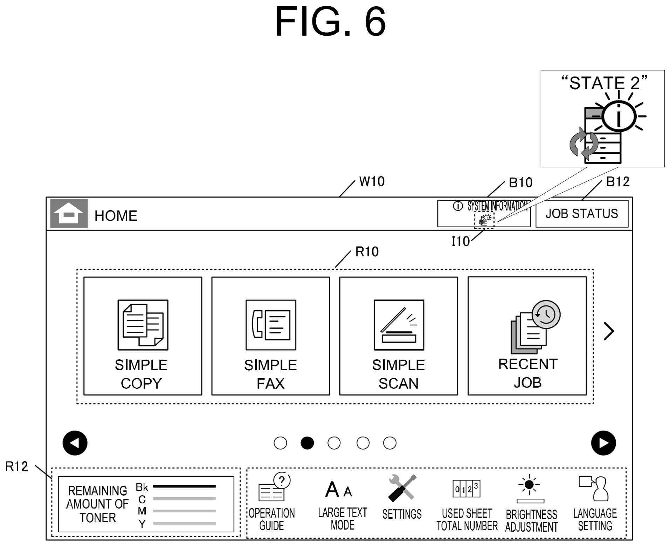

FIG. 6 illustrates a state in which the icon I10 as an animation video is displayed on the home screen W10 when the processing status related to firmware update is the update preparation completion stage for firmware whose download is completed.

The system information button B10 illustrated in FIG. 6 is an example of a case where the system information button B10 functions as a display area that displays the character string "system information" indicating that the button is a button that receives an instruction to display the system information screen and the icon I10 as an animation video for "state 2" indicating the processing status for firmware update (update preparation completion stage for firmware whose download is completed).

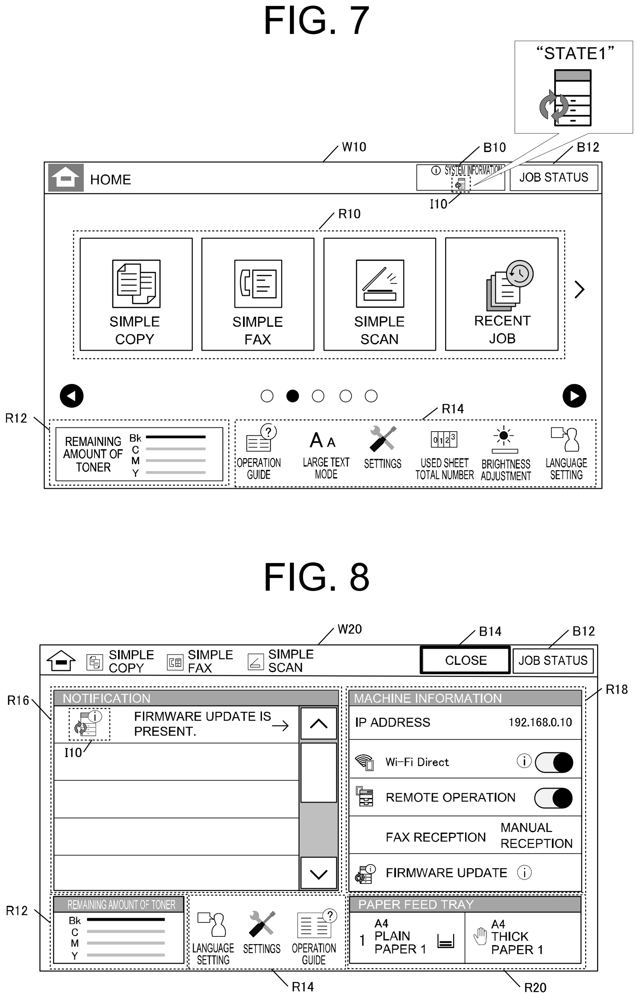

FIG. 7 illustrates a state in which the icon I10 as a still image for "state 1" is displayed on the home screen W10 when the processing status related to firmware update is the firmware update completion stage, and is the same as FIG. 5.

Display control of the icon corresponding to the processing status related to firmware update may be performed on the system information screen displayed by selection of the system information button B10, other than the home screen W10 illustrated in FIGs. 5 to 7.

For example, FIG. 8 illustrates an example of a display configuration of a system information screen W20 that is displayed by the controller 11 upon receipt of an instruction by selection of the system information button B10 on the home screen W10 illustrated in FIGs. 5 to 7.

The system information screen W20 includes the apparatus state display area R12, the function selection area R14, a notification display area R16, a machine information display area R18, a paper feed tray display area R20, a close button B14, and the job status button B12. The same components as those described with reference to FIGs. 5 to 7 and the like are denoted by the same reference numerals, and the description thereof is omitted.

The notification display area R16 is a display area that displays a notification (error information, event information on running out of toner or firmware update, maintenance information, or the like) to the user. The notification display area R16 displays information with relatively high urgency, such as information that requires a quick response from the user to continuously execute the execution job. FIG. 8 illustrates an example in which the notification display area R16 displays, as the content of the notification, in addition to "Firmware update is present", the icon I10 as a still image for "state 2A" in FIG. 3B. The display of the icon in this display area may be linked to the display in the display area of the system information button B10.

When the firmware update item in the notification display area R16 is selected, as in the example in FIG. 14, a dialog that receives an instruction by selection of whether to execute the firmware update is displayed. When an instruction by selection of an "OK " button in the dialog is received from the user, the controller 11 starts the firmware update.

The machine information display area R18 is a display area that displays information on a machine status (e.g., communication setting, communication status, or the like). FIG. 8 illustrates an example in which the machine information display area R18 displays, as machine information, an IP address, Wi-fi Direct that allows connection between devices without a wireless router, remote operation for remote control of the image forming apparatus 10, a fax reception setting, and the like. When the firmware update function is enabled, the machine information display area R18 displays an icon related to firmware update, the character string "firmware update", and an [i] button. When the [i] button is selected by the user, the controller 11 displays a dialog message corresponding to the processing status related to firmware update. In this case, the controller 11 can display the same dialog message as the dialog message displayed when the firmware update item in the notification display area R16 is selected by the user.

The paper feed tray display area R20 is a display area that displays a paper feed tray attached to the image forming apparatus 10, information (paper size, paper type) on the sheets of paper stored in the paper feed tray, the remaining number of sheets of paper, and the like. In the paper feed tray display area R20, the paper feed tray to which paper is being fed (in operation) may be displayed to be distinguishable from the other paper feed trays.

The close button B14 is displayed instead of the system information button B10 when the system information screen W20 is displayed, and is a button that receives an instruction to end the display of the system information screen W20.

In the notification display area R16 or the machine information display area R18 on the system information screen W20, by performing, in addition to notification to the user, display control of the icon corresponding to the content of the notification, it is possible to draw more attention from the user.

As described above, the first embodiment enables a user to clearly recognize a notification of firmware update to be notified, by changing a display mode of an icon corresponding to firmware update as a specific function according to a processing status related to execution of the firmware update.

### 2 Second Embodiment

In an image forming apparatus according to a second embodiment, in a case where the image forming apparatus is in a low power consumption mode such as a preheating mode in which the temperature of a fixer is lowered and the image forming apparatus is in a standby state, when a setting that turns off an operation screen is enabled, instead of turning off the operation screen, the image forming apparatus applies a scrim to objects other than an icon to allow the icon to be conspicuous.

The functional configuration and processing flow of the image forming apparatus according to the second embodiment may be the same as those of the image forming apparatus 10 according to the first embodiment, and thus the description thereof is omitted.

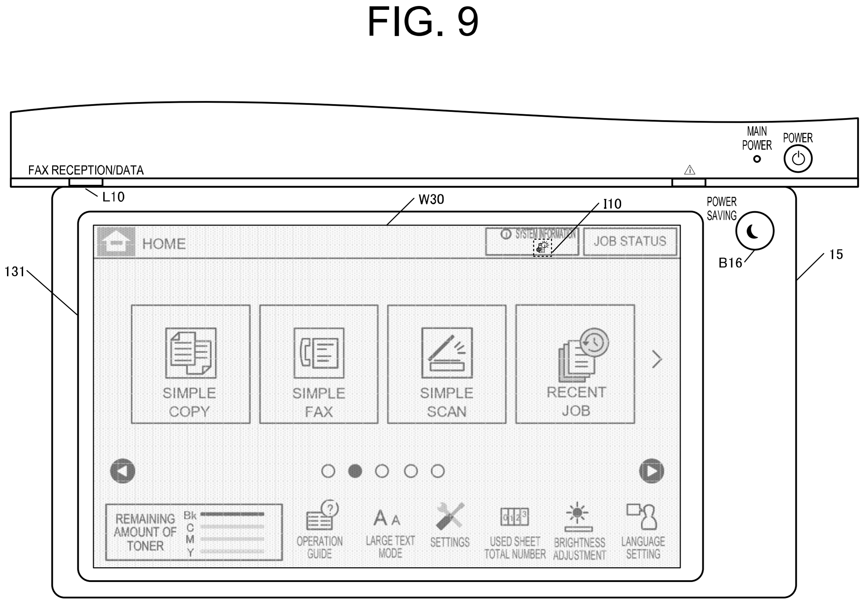

FIG. 9 is a diagram schematically illustrating an example of a configuration of the operation inputter 15 of the image forming apparatus 10 according to the second embodiment. The operation inputter 15 includes a touch panel display 131, a fax reception/data lamp L10, and a power saving button B16.

The touch panel display 131 is a display device capable of receiving an input of a touch operation from the user. The touch panel display 131 displays an operation screen such as the home screen, the job setting screen, or the system information screen previously described. FIG. 9 is a diagram illustrating a state in which a home screen W30 on which a scrim is applied to the objects other than the icon I10 is displayed on the touch panel display 131.

The fax reception/data lamp L10 is a light emitting device that notifies reception of fax data or a state of the image forming apparatus 10 by using different light emitting patterns (turned on, blinking, turned off, and the like) according to a job being executed.

The power saving button B16 is a button that receives an instruction to switch an operation mode of the image forming apparatus 10 to an automatic power shutoff mode. The automatic power shutoff mode is a type of low power consumption mode in which the power to an operation screen and the fixer is turned off to cause the image forming apparatus 10 to be in the standby state with lowest power consumption. When an instruction by selection of the power saving button B16 is received from the user, the controller 11 shifts the operation mode of the image forming apparatus 10 to the automatic power shutoff mode. While the image forming apparatus 10 is in the automatic power shutoff mode, an operation screen is turned off, and the power saving button B16 is blinking. When the blinking power saving button B16 is selected by the user or when print data, fax data, or the like is received, the automatic power shutoff mode is terminated.

On the other hand, the preheating mode is a type of low power consumption mode in which the temperature of the fixer is lowered and the image forming apparatus 10 is in the standby state with low power consumption. In the preheating mode, the power saving rate is lower than in the automatic power shutoff mode, but less time is required for reactivation than in the automatic power shutoff mode. In the preheating mode, it is possible to enable or disable the setting that turns off an operation screen while the image forming apparatus 10 is in the standby state. In the second embodiment, in a case where the image forming apparatus 10 is in the low power consumption mode such as the preheating mode, when the setting that turns off an operation screen is enabled, instead of turning off the operation screen, the image forming apparatus 10 performs display control to apply a scrim to the objects other than the icon corresponding to firmware update. As in the case where the operation screen is turned off, the user can terminate the preheating mode by performing a touch operation on the operation screen on which the scrim is applied.

As illustrated in FIG. 9, on the operation screen, a scrim is applied to the displayed objects other than the icon I10 corresponding to firmware update, thus allowing the icon I10 to be particularly conspicuous. On the other hand, the image forming apparatus 10 may perform display control to apply a scrim on the operation screen only when the icon I10 is displayed as an animation video. In the second embodiment, the processing status for firmware update may be notified, for example, by outputting a notification sound using a voice output device (not illustrated) or by providing notification using a light emitting device such as the fax reception/data lamp L10.

As described above, the second embodiment enables a user to clearly recognize an event to be notified even when the operation mode of the image forming apparatus 10 is the low power consumption mode such as the preheating mode.

### 3 Third Embodiment

A third embodiment is obtained by improving the display content of the dialog that receives an instruction by selection of whether to execute firmware update described with reference to FIGs. 8 and 14. The same components as those described with reference to FIGs. 8 and 14 are denoted by the same reference numerals, and the description thereof is omitted.

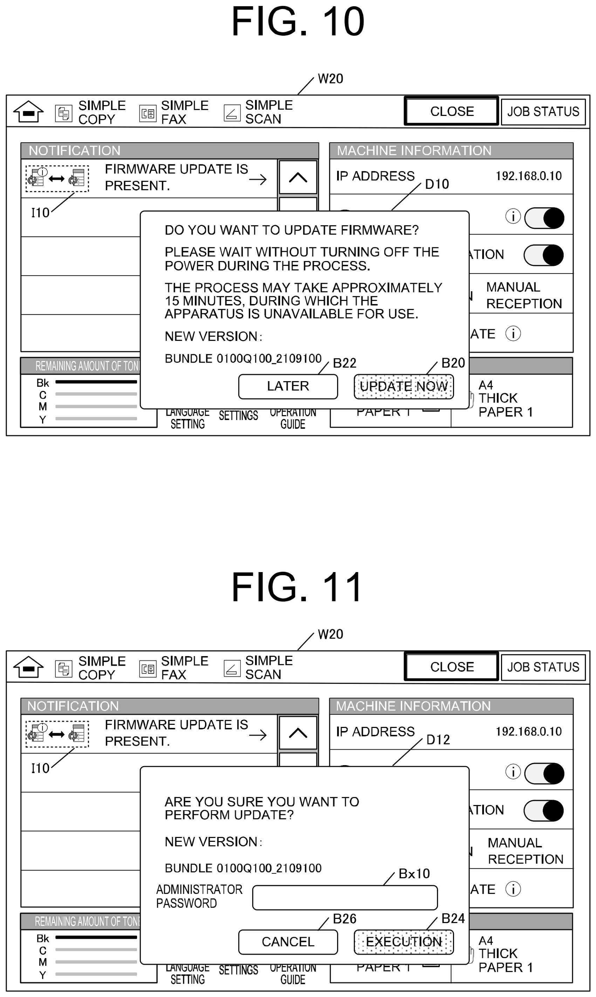

FIG. 10 is a diagram illustrating an example of a display configuration of a dialog D10 according to the third embodiment. The dialog D10 illustrated in FIG. 10 is a screen that is automatically displayed at a time at which firmware update is possible in a case where the firmware update setting is in the automatic firmware update mode. When no user operation is performed for a predetermined time (e.g., 10 minutes) after the dialog D10 is displayed, the update is automatically started.

In the third embodiment, the button names of the OK button B60 and the cancel button B62 included in the dialog D60 in FIG. 14 are changed to button names of an "update now" button B20 and a "later" button B22, respectively. When the "later" button B22 is selected by the user, the controller 11 closes the dialog D10, and redisplays the dialog D10 after a predetermined time (e.g., 30 minutes) has elapsed. On the other hand, when the "update now" button B20 is selected by the user, the controller 11 displays a dialog D12 illustrated in the next figure.

In a case where the firmware update setting is in the manual mode, the same dialog as the dialog D10 except that the cancel button B62 is changed to a "close" button is displayed upon receipt of an instruction by selection of the firmware update item in the notification display area R16 or the [i] button related to firmware update in the machine information display area R18. When the "close" button is selected by the user, the controller 11 closes the dialog, and does not display the dialog until an instruction by selection of the firmware update item in the notification display area R16 or the [i] button related to firmware update in the machine information display area R18 is received again. On the other hand, when the "update now" button is selected by the user, the same operation as in the automatic mode is performed.

FIG. 11 is a diagram illustrating an example of a display configuration of the dialog D12 that is displayed by the controller 11 upon receipt of an instruction by selection of the "update now" button B20 of the dialog D10. The dialog D12 includes an administrator password input box Bx10, an "execution" button B24, and a "cancel" button B26.

The administrator password input box Bx10 is an input box that receives an input of a password of an administrator (user) who approves firmware update. The "execution" button B24 is a button that receives an input of an instruction to execute the firmware update from the administrator (user). The "cancel" button B26 is a button that receives an instruction to cancel the firmware update.

When a password is input to the administrator password input box Bx10 and an instruction by selection of the "execution" button B24 is received, the controller 11 checks whether the input password is correct. When the controller 11 determines that the input password is correct, the controller 11 starts the firmware update. On the other hand, when the controller 11 determines that the input password is incorrect, the controller 11 prompts the user to input the correct password.

A display time of the dialog D10 can be appropriately changed. For example, when a display interval of the dialog D10 is currently 10 minutes, the display interval can be increased or decreased.

As illustrated in FIG. 10, by changing the button names of the dialog, it is possible to enable the user to easily and clearly recognize postponement of the firmware update, without causing misunderstanding. Furthermore, by changing the button names of the dialog, it is possible to enable the user to recognize that a notification related to the dialog is different from other notifications and is a notification of an important event.

As described above, in addition to achieving the effects of the first embodiment, the third embodiment enables a user to more clearly recognize that a notification related to a displayed dialog is a notification of an important event, by changing a button name of an operation button of the dialog, in addition to performing display control of an icon as an object.

The present disclosure is not limited to the above-described embodiments, and various modifications can be made. That is, embodiments obtained by combining technical measures appropriately modified without departing from the gist of the present disclosure are also included in the technical scope of the present disclosure.

Although the above-described embodiments are described separately for convenience of explanation, it is needless to say that the embodiments may be implemented in combination within a technically feasible range.

The program that operates in each device in the embodiments is a program that controls a CPU and the like (a program that causes a computer to function) to implement the functions of the above-described embodiments. Information handled by the devices is temporarily accumulated in a temporary storage device (e.g., a RAM) during processing, is then stored in various storage devices such as a ROM and an HDD, and is read, corrected, and written by the CPU as necessary.

A non-transitory computer-readable recording medium on which a program in an information processing apparatus is recorded may be any of a semiconductor medium (e.g., a ROM, a nonvolatile memory card, or the like), an optical recording medium/magneto-optical recording medium (e.g., a digital versatile disc (DVD), a magneto-optical disc (MO), a MiniDisc (MD), a compact disc (CD), a Blu-ray (registered trademark) disc (BD), or the like), a magnetic recording medium (e.g., a magnetic tape, a flexible disk, or the like), and the like. In this case, the program recorded on the recording medium is read by a computer of the information processing apparatus and executed by the computer, and thus not only the functions of the above-described embodiments are implemented, but also the functions of the present disclosure are implemented by processing in cooperation with an operating system, another application program, or the like, based on the instructions of the program.

In a case where the program is distributed in the market, the program can be stored in a portable recording medium and distributed, or can be transferred to a server computer connected via a network such as the Internet. In this case, it is needless to say that a storage device of the server computer is also included in the present disclosure.

Each functional block or various features of the devices used in the above-described embodiments can be implemented or executed by an electric circuit, for example, an integrated circuit or a plurality of integrated circuits. An electric circuit designed to implement the functions described herein may include a general purpose processor, a digital signal processor (DSP), an application-specific integrated circuit (ASIC), a field programmable gate array (FPGA), or other programmable logic devices, discrete gates or transistor logic, discrete hardware components, or a combination thereof. The general purpose processor may be a microprocessor, or a conventional processor, controller, microcontroller, or state machine. The electric circuit described above may be composed of a digital circuit or an analog circuit. When an integrated circuit technology replacing the current integrated circuits emerges due to advances in semiconductor technology, one or more aspects of the present disclosure can use a new integrated circuit based on the technology.

### REFERENCE SIGNS LIST

10 Image forming apparatus
11 Controller
13 Display
15 Operation inputter
17 Communicator
19 Storage
190 Control program
1901 Firmware management program
191 Display control program
192 Job program
193 Processing status determination program
194 Job storage area
195 Object information storage area
196 Firmware storage area
21 Image processor
211 Image former
213 Image inputter

## Claims

1. A processing apparatus (10) comprising:
a display (13) that displays an object corresponding to a specific function; and
one or more controllers (11), wherein
the one or more controllers (11) change a display mode of the object according to a processing status related to execution of the specific function.

2. The processing apparatus (10) according to claim 1, wherein
the processing status includes a plurality of processing stages, and
the one or more controllers (11) change the display mode of the object for each of the processing stages.

3. The processing apparatus (10) according to claim 2, wherein
the one or more controllers (11) change the display mode of the object by switching, for display, to an image or a video corresponding to the specific function for each of the processing stages.

4. The processing apparatus (10) according to claim 3, wherein
the specific function is a function related to firmware update, and
the one or more controllers (11) change the display mode of the object for each of the processing stages including at least a download stage for firmware for update, an update preparation completion stage for the firmware whose download is completed, and an update completion stage for the firmware whose download is completed.

5. The processing apparatus (10) according to claim 4, wherein
in the download stage, the one or more controllers (11) display the object as a still image; in the update preparation completion stage, the one or more controllers (11) display the object as an animation video different from the still image; and in the update completion stage, the one or more controllers (11) display the object as the still image.

6. The processing apparatus (10) according to claim 1, wherein
the one or more controllers (11) display the object in a predetermined area of an operation screen of the processing apparatus.

7. The processing apparatus (10) according to claim 6, wherein
the one or more controllers (11) display the object in the predetermined area as an operation object that receives an instruction to display an integration screen on which system information of the processing apparatus (10) is integrated.

8. A display method of displaying an object corresponding to a specific function, the display method comprising
changing a display mode of the object according to a processing status related to execution of the specific function.
